# EUROPÄISCHE PATENTSCHRIFT

(11) **EP 2 238 639 B1**
(45) Veröffentlichungstag und Bekanntmachung des Hinweises auf die Patenterteilung: **08.10.2014**
(21) Anmeldenummer: 09706571.8
(22) Anmeldetag: 28.01.2009
(51) Int. Cl.: H01M 8/04, B64D 41/00

(54) **LUFTFAHRZEUG-BRENNSTOFFZELLENSYSTEM**
AIRCRAFT FUEL CELL SYSTEM
SYSTÈME DE CELLULE À COMBUSTIBLE POUR AÉRONEF

(30) Priorität: 30.01.2008 DE 102008006742; 30.01.2008 US 24579 P
(43) Veröffentlichungstag der Anmeldung: 13.10.2010
(73) Patentinhaber: Airbus Operations GmbH, 21129 Hamburg (DE)
(72) Erfinder: WESTENBERGER, Andreas, 21614 Buxtehude (DE); ARENDT, Martin, 38527 Meine (DE); FRAHM, Lars, 20357 Hamburg (DE); MARQUARDT, Till, 22299 Hamburg (DE)
(74) Vertreter: Schicker, Silvia
(86) Internationale Anmeldenummer: PCT/EP2009/000537
(87) Internationale Veröffentlichungsnummer: WO 2009/095218

(56) Entgegenhaltungen:
- WO-A-2008/001006
- DE-A1- 19 821 952
- DE-A1-102004 034 870
- US-A1- 2006 237 583
- US-A1- 2007 172 707
- US-B2- 6 834 831

## Beschreibung

Die vorliegende Erfindung betrifft ein mit einem Brennstoffzellensystem ausgestattetes Luftfahrzeug, insbesondere ein Flugzeug. Ferner betrifft die Erfindung ein Verfahren zum Betreiben eines derartigen Luftfahrzeugs.

Brennstoffzellensysteme ermöglichen es, emissionsarm und mit einem hohen Wirkungsgrad elektrischen Strom zu erzeugen. Daher gibt es gegenwärtig auch im Flugzeugbau Bestrebungen, Brennstoffzellensysteme zur Erzeugung der an Bord eines Flugzeugs benötigten elektrischen Energie heranzuziehen. Beispielsweise ist es denkbar, die derzeit zur Bordstromversorgung eingesetzten, von den Haupttriebwerken oder der Hilfsturbine angetriebenen Generatoren durch ein Brennstoffzellensystem teilweise zu ersetzen. Darüber hinaus könnte ein Brennstoffzellensystem auch zur Notstromversorgung des Flugzeugs verwendet werden und die bisher als Notstromaggregat eingesetzte Ram Air Turbine (RAT) ersetzen.

Brennstoffzellen umfassen üblicherweise einen Kathodenbereich sowie einen durch einen Elektrolyt von dem Kathodenbereich getrennten Anodenbereich. Im Betrieb der Brennstoffzelle wird der Anodenseite der Brennstoffzelle ein Brennstoff, beispielsweise Wasserstoff, und der Kathodenseite der Brennstoffzelle ein sauerstoffhaltiges Oxidationsmittel, beispielsweise Luft zugeführt. Bei einer Polymerelektrolytmembran-Brennstoffzelle reagieren die Wasserstoffmoleküle an einem im Anodenbereich vorhandenen Anodenkatalysator beispielsweise nach der Gleichung

H₂ → 2·H⁺ + 2·e⁻

und geben dabei unter Bildung von positiv geladenen Wasserstoffionen Elektronen an die Elektrode ab.

Die im Anodenbereich gebildeten H⁺-Ionen diffundieren anschließend durch den Elektrolyt zur Kathode, wo sie an einem im Kathodenbereich vorhandenen Kathodenkatalysator mit dem der Kathode zugeführten Sauerstoff sowie den über einen äußeren Stromkreis zur Kathode geleiteten Elektronen nach der Gleichung

0,5·O₂ + 2·H⁺ + 2·e⁻ → H₂O

zu Wasser reagieren.

Um Druckverluste innerhalb des Brennstoffzellensystems zu minimieren, eine gleichmäßige Gasverteilung an den Elektroden der Brennstoffzelle zu gewährleisten und den Volumenstrom durch die Brennstoffzelle möglichst gering zu halten, ist es vorteilhaft der Kathode einer Brennstoffzelle verdichtete Luft, d.h. Luft mit einem über dem Umgebungsdruck liegenden Druck zuzuführen.

Aus der WO 2008/001006 A1 ist ein Brennstoffzellensystem zur Verwendung an Bord eines Flugzeugs bekannt, bei dem einer Brennstoffzelle aus einer Flugzeugkabine abgeführte und von einem Kompressor komprimierte Luft zugeführt wird. In einer dem Kompressor mit der Brennstoffzelle verbindenden Leitung ist ein Wärmetauscher angeordnet. Der Wärmetauscher stellt eine thermische Kopplung zwischen einem Abgasstrom einer den Kompressor antreibenden Turbine und der der Brennstoffzelle von dem Kompressor zugeführten komprimierten Luft her, so dass die in dem Turbinenabgas enthaltene Restwärme dazu genutzt werden kann, die der Brennstoffzelle zugeführte komprimierte Luft vorzuwärmen. Neben dem Kompressor treibt die Turbine einen weiteren Kompressor an, der mit dem Kompressor auf einer gemeinsamen Welle angeordnet ist und dazu dient, eine Klimaanlage des Flugzeugs mit komprimierter Luft zu versorgen.

Die Dokumente US 2007/172707 A1, US 6,834,831 B2, US 2006/237583 A1 und DE 10 2004 034 870 A1 beschreiben jeweils zur Verwendung an Bord eines Flugzeugs vorgesehene Brennstoffzellensysteme, bei denen einer Brennstoffzelle gegebenenfalls von einem Kompressor komprimierte Kabinenabluft zugeführt wird. In einer mit einer Kathode der Brennstoffzelle verbundenen Leitung ist jeweils ein Wärmetauscher zur Vorwärmung der der Brennstoffzellenkathode zugeführten Luft angeordnet. Die zur Vorwärmung der der Brennstoffzellenkathode zugeführten Luft erforderliche Wärmeenergie wird entweder den Wärmetauscher durchströmenden Brennstoffzellenabgasen, Turbinenabgasen oder Brennerabgasen entnommen.

Der Erfindung liegt die Aufgabe zugrunde, ein Luftfahrzeug mit einem Brennstoffzellensystem bereitzustellen, das eine energieeffiziente Versorgung einer Brennstoffzelle mit verdichteter Luft ermöglicht. Ferner liegt der Erfindung die Aufgabe zugrunde, ein Verfahren zum Betreiben eines derartigen Luftfahrzeugs anzugeben.

Die Aufgabe wird durch ein Luftfahrzeug mit den Merkmalen des Anspruchs 1 und ein Verfahren zum Betreiben eines Luftfahrzeugs mit den Merkmalen des Anspruchs 7 gelöst.

Ein Luftfahrzeug-Brennstoffzellensystem umfasst eine Brennstoffzelle, die einen Oxidationsmitteleinlass zur Zufuhr eines sauerstoffhaltigen Mediums in die Brennstoffzelle aufweist. Vorzugsweise wird der Brennstoffzelle Luft als Oxidationsmittel zugeführt. Wenn es sich bei der Brennstoffzelle beispielsweise um eine Polymerelektrolytmembran-Brennstoffzelle handelt, ist der Oxidationsmitteleinlass mit einem Kathodenbereich der Brennstoffzelle verbunden. Ein Anodenbereich der Brennstoffzelle weist vorzugsweise einen Brennstoffeinlass auf, über den dem Anodenbereich der Brennstoffzelle ein Brennstoff, vorzugsweise Wasserstoff, zugeführt werden kann. Das eLuftfahrzeug-Brennstoffzellensystem umfasst ferner eine Oxidationsmittelzufuhrleitung. Ein erstes Ende der Oxidationsmittelzufuhrleitung ist mit dem Oxidationsmitteleinlass der Brennstoffzelle verbunden. Ein zweites Ende der Oxidationsmittelzufuhrleitung ist mit einem Abluftauslass einer Kabine des Luftfahrzeugs verbindbar. Dadurch wird es ermöglicht, dem Oxidationsmitteleinlass der Brennstoffzelle über die Oxidationsmittelzufuhrleitung Abluft aus der Kabine des Luftfahrzeugs zuzuleiten. In der Brennstoffzelle wird der in der Kabinenabluft enthaltene Sauerstoff beispielsweise durch die oben beschriebene Kathodenreaktion umgesetzt.

Die vorliegende Erfindung macht sich die Tatsache zunutze, dass die Kabine eines Luftfahrzeugs, beispielsweise eines Flugzeugs, im Flugbetrieb des Luftfahrzeugs mit Hilfe einer Klimaanlage auf einem gegenüber dem Umgebungsdruck erhöhten Druck gehalten wird. Beispielsweise beträgt der Kabinendruck in einem Passagierflugzeug auch dann, wenn sich das Flugzeug auf Reiseflughöhe befindet und der Umgebungsdruck bei lediglich ca. 0,25 bar liegt, ungefähr 0,8 bar. Üblicherweise wird die Kabinenabluft teilweise als Rezirkulationsluft in eine Mischkammer der Klimaanlage zurückgeführt, teilweise jedoch auch ungenutzt über Bord geleitet. Die vorliegende Erfindung ermöglicht es nun, einen Teil der Kabinenabluft, der vorzugsweise dem in bisherigen Systemen ungenutzt über Bord geleiteten Abluftstrom entnommen wird, zum Betreiben der an Bord des Luftfahrzeugs vorgesehenen Brennstoffzelle zu nutzen. Da sich die Kabinenabluft im Flugbetrieb des Luftfahrzeugs bereits auf einem deutlich höheren Druckniveau befindet als die Umgebungsluft, kann bei der Nutzung von Kabinenabluft als Oxidationsmittel in einer Brennstoffzelle die zur Gewährleistung einer ordnungsgemäßen Funktion der Brennstoffzelle erforderliche Druckerhöhung der der Brennstoffzelle zuzuführenden Luft deutlich geringer ausfallen als bei der Nutzung von Umgebungsluft. Die vorliegende Erfindung ermöglicht es somit, den Energieaufwand für die Verdichtung eines einer Brennstoffzelle im Betrieb zuzuführenden Oxidationsmittelstroms zu minimieren. Ein weiterer Vorteil des Luftfahrzeug-Brennstoffzellensystem besteht darin, dass zur Luftversorgung des Brennstoffzellensystems keine zusätzlichen Staulufteinlässe an dem Luftfahrzeug vorgesehen werden müssen. Dadurch wird eine nachteilige Erhöhung des Luftwiderstands des Luftfahrzeugs vermieden.

Bei einer bevorzugten Ausführungsform des Luftfahrzeug-Brennstoffzellensystems ist in der Oxidationsmittelzufuhrleitung ein Verdichter angeordnet. Der Verdichter dient dazu, die der Brennstoffzelle zuzuführende Kabinenabluft auf ein Druckniveau zu verdichten, das sowohl im Bodenbetrieb als auch im Flugbetrieb eines mit dem Luftfahrzeug-Brennstoffzellensystem ausgestatteten Luftfahrzeugs eine ordnungsgemäße Funktion des Brennstoffzellensystems gewährleistet. Vorzugsweise ist der Verdichter dazu eingerichtet, den der Brennstoffzelle zuzuführenden Kabinenabluftstrom auf ein Druckniveau von ca. 1,3 bis 1,4 bar zu verdichten. Darüber hinaus wird durch die Verdichtung die Temperatur des der Brennstoffzelle zuzuführenden Kabinenabluftstroms erhöht. Vorzugsweise weist der der Brennstoffzelle zuzuführende Luftstrom nach der Verdichtung eine Temperatur auf, die in etwa der Betriebstemperatur der Brennstoffzelle entspricht.

Wenn bei dem Luftfahrzeug-Brennstoffzellensystem eine Brennstoffzelle, wie z.B. eine Niedrigtemperatur-Polymerelektrolytmembran-Brennstoffzelle zum Einsatz kommt, die bei einem vergleichsweise niedrigen Betriebstemperaturniveau arbeitet, weist die der Brennstoffzelle zuzuführende Kabinenabluft unter Umständen bereits nach ihrer Verdichtung durch den in der Oxidationsmittelzufuhrleitung angeordneten Verdichter die gewünschte Temperatur auf. Ein Luftfahrzeug-Brennstoffzellensystem, das mit einer auf einem höheren Betriebstemperaturniveau arbeitenden Brennstoffzelle, wie z.B. einer Hochtemperatur-Polymerelektrolytmembran-Brennstoffzelle ausgestattet ist, umfasst jedoch vorzugsweise ferner einen in der Oxidationsmittelzufuhrleitung angeordneten Wärmetauscher. Der Wärmetauscher dient dazu, Wärme von einem Wärmeträgermedium auf die der Brennstoffzelle zuzuführende Kabinenabluft zu übertragen. Eine energieeffiziente Wärmeübertragung auf die der Brennstoffzelle zuzuführende Kabinenabluft ist aufgrund der höheren Temperaturdifferenz möglich, wenn der Wärmetauscher stromaufwärts des Verdichters in der Oxidationsmittelzufuhrleitung angeordnet ist. Insbesondere kann durch die größere Temperaturdifferenz bei dieser Anordnung die Wärmeübertragerfläche und damit Größe und Gewicht des Übertragers kleiner gehalten werden.

Der Wärmetauscher des Luftfahrzeug-Brennstoffzellensystems ist dazu eingerichtet, eine thermische Kopplung zwischen dem die Oxidationsmittelzufuhrleitung durchströmenden Medium und einem Medium herzustellen, das eine Leitung einer Luftfahrzeug-Klimaanlage durchströmt. Der Wärmetauscher wird von zu kühlender Klimaprozessluft durchströmt, die von einem Klimaaggregat des Luftfahrzeugs bereitgestellt wird und beispielsweise zur Belüftung der Kabine des Luftfahrzeugs vorgesehen ist. Die Wärmeübertragung von der zu kühlenden Klimaprozessluft auf die zu erwärmende Brennstoffzellenzuluft kann besonders energieeffizient gestaltet werden, wenn dem Wärmetauscher die Klimaprozessluft nach einer Verdichtung durch einen Kabinenluftverdichter (Cabin-Air-Compressor, CAC) zugeführt wird, da sich die Klimaprozessluft dann auf einem vergleichsweise hohen Temperaturniveau befindet. Insbesondere kann durch die größere Temperaturdifferenz bei dieser Anordnung die Wärmeübertragerfläche und damit Größe und Gewicht des Übertragers kleiner gehalten werden. Der Wärmetauscher ist daher stromabwärts eines Kabinenluftverdichters in einer Klimaprozessluftleitung der Luftfahrzeug-Klimaanlage angeordnet.

Durch die Kopplung des Luftfahrzeug-Brennstoffzellensystems mit der Luftfahrzeug-Klimaanlage wird der Energieaufwand für die Aufbereitung der der Brennstoffzelle zuzuführenden Kabinenabluft minimiert. Gleichzeitig sinken die Leistungsanforderungen an ein elektrisches Klimatisierungssystem der Luftfahrzeug-Klimaanlage, da der Klimaprozessluft in dem Wärmetauscher Wärme entnommen wird. Das hat zur Folge, dass die Leistungsanforderungen an den Kabinenluftverdichter sowie an Primär- und Sekundärwärmeübertrager der Luftfahrzeug-Klimaanlage ebenso sinken, wie der Stauluftbedarf des Klimaprozesses. Ein geringerer Stauluftbedarf führt unmittelbar zu einer vorteilhaften Verringerung des Luftwiderstands des Luftfahrzeugs.

Das Luftfahrzeug-Brennstoffzellensystem umfasst vorzugsweise ferner eine Bypassleitung zur Umgehung des Wärmetauschers. Auf dem Abluftauslass der Luftfahrzeug-Kabine strömende Abluft kann dann wahlweise oder teilweise zur Temperaturerhöhung durch den Wärmetauscher geführt oder an dem Wärmetauscher vorbeigeleitet werden. Zur Steuerung der Strömung durch den Wärmetauscher bzw. die Bypassleitung kann ein Ventil oder eine Mehrzahl von Ventilen vorgesehen sein. Mit Hilfe des Ventils/der Ventile ist eine Steuerung der Temperatur des die Oxidationsmittelzufuhrleitung durchströmenden Mediums möglich.

Die Oxidationsmittelzufuhrleitung des Luftfahrzeug-Brennstoffzellensystems kann über eine Umgebungsluftleitung mit einem Stauluftkanal des Luftfahrzeugs verbindbar sein. Vorzugsweise zweigt die Umgebungsluftleitung stromaufwärts des Verdichters von der Oxidationsmittelzufuhrleitung ab. In der Umgebungsluftleitung kann ein Ventil zur Steuerung der Umgebungsluftzufuhr durch die Umgebungsluftleitung angeordnet sein. Über die Umgebungsluftleitung kann der Brennstoffzelle auch dann ausreichend Luft zugeführt werden, wenn die der Brennstoffzelle über den Abluftauslass der Luftfahrzeug-Kabine zugeführte Kabinenabluft nicht ausreicht, um einen ordnungsgemäßen Betrieb der Brennstoffzelle zu gewährleisten. Die Umgebungsluftleitung erfüllt demnach eine Redundanz- und Sicherheitsfunktion, die besonders wichtig ist, wenn das Luftfahrzeug-Brennstoffzellensystem dazu vorgesehen ist, sicherheitsrelevante Einrichtungen an Bord des Luftfahrzeugs mit elektrischer Energie zu versorgen.

In vielen Betriebszuständen des Luftfahrzeug-Brennstoffzellensystems liegt der Druck des aus der Brennstoffzelle austretenden Brennstoffzellenabgases über dem Umgebungsdruck. Es versteht sich, dass der Druck des Brennstoffzellenabgases von den Umgebungsbedingungen, der Flughöhe des Luftfahrzeugs sowie dem Lastzustand der Brennstoffzelle abhängt, er kann jedoch bis zum Dreifachen des Umgebungsdrucks betragen. Um eine Rückgewinnung der in dem Brennstoffzellenabgas gespeicherten Druckenergie zu ermöglichen, ist ein Abgasauslass der Brennstoffzelle vorzugsweise mit einer Expansionsvorrichtung verbunden. Die Expansionsvorrichtung kann beispielsweise in Form einer Turbine ausgebildet sein und dazu dienen, das unter einem erhöhten Druck stehende Brennstoffzellenabgas auf den Umgebungsdruck zu entspannen.

Die beispielsweise in Form einer Turbine ausgebildete Expansionsvorrichtung kann mit einem Generator gekoppelt sein, der die mechanische Energie der Turbine in elektrische Energie umwandelt. Die von dem Generator gewonnene elektrische Energie kann beispielsweise in ein Bordnetz des Luftfahrzeugs eingespeist werden. Alternativ dazu kann die Expansionsvorrichtung jedoch auch mit einem Verdichter oder mehreren Verdichtern gekoppelt sein. Der/die Verdichter kann/können mit der Expansionsvorrichtung auf einer gemeinsamen Welle angeordnet sein. Der/die von der Expansionsvorrichtung angetriebene/angetriebenen Verdichter kann/können der in der Oxidationsmittelzufuhrleitung angeordnete Verdichter zur Verdichtung der der Brennstoffzelle zuzuführenden Kabinenabluft sein. Alternativ dazu kann/können der/die von der Expansionsvorrichtung angetriebene/angetriebenen Verdichter jedoch auch der Luftfahrzeug-Klimaanlage zugeordnet sein. Da ein Teil der in der Auslassluft gespeicherten Energie durch die Klimaanlage in Form von Verdichtungsarbeit eingebracht wird, ist zu erwarten, dass durch eine Expansion des Brennstoffzellenabgases doppelt soviel Energie gewonnen werden kann, wie der in der Oxidationsmittelzufuhrleitung angeordnete Verdichter zur Verdichtung der der Brennstoffzelle zuzuführenden Kabinenabluft im Betrieb benötigt.

Ein redundant ausgebildetes und somit besonders zuverlässig arbeitendes Luftfahrzeug-Brennstoffzellensystem umfasst eine Mehrzahl von Brennstoffzellen sowie eine Mehrzahl von Verdichtern zur Verdichtung der den Brennstoffzellen zuzuführenden Kabinenabluft. Die Verdichter können in jeweiligen Zweigen der Oxidationsmittelzufuhrleitung angeordnet sein, die die jeweiligen Oxidationsmitteleinlässe der Brennstoffzellen mit dem Abluftauslass der Luftfahrzeug-Kabine verbinden. Vorzugsweise ist jeder Brennstoffzelle ein Verdichter zugeordnet.

Grundsätzlich kann jeder Verdichter von einem Elektromotor angetrieben werden. Alternativ dazu ist es jedoch auch denkbar, zwei oder mehr Verdichter auf einer gemeinsamen Welle anzuordnen und lediglich einen Elektromotor zum Antreiben dieser Verdichter vorzusehen. Schließlich ist der Antrieb eines Verdichters oder mehrerer auf einer gemeinsamen Welle angeordneten Verdichter durch die Air-Cycle-Machine eines Klimaaggregats der Luftfahrzeug-Klimaanlage denkbar.

Bei einem Verfahren zum Betreiben eines Luftfahrzeug-Brennstoffzellensystems wird eine Brennstoffzelle mit einem Oxidationsmitteleinlass zur Zufuhr eines sauerstoffhaltigen Mediums in die Brennstoffzelle bereitgestellt, wobei der Oxidationsmitteleinlass der Brennstoffzelle mit einem ersten Ende einer Oxidationsmittelzufuhrleitung verbunden ist. Dem Oxidationsmitteleinlass der Brennstoffzelle wird über die Oxidationsmittelzufuhrleitung Abluft aus einem Abluftauslass einer Kabine des Luftfahrzeugs zugeführt.

Das die Oxidationsmittelzufuhrleitung durchströmende Medium kann vor seiner Zufuhr in die Brennstoffzelle verdichtet werden.

Das die Oxidationsmittelzufuhrleitung durchströmende Medium wird in einem Wärmetauscher thermisch mit Klimaprozessluft gekoppelt, die eine Leitung einer Luftfahrzeug-Klimaanlage durchströmt.

Die Temperatur des die Oxidationsmittelzufuhrleitung durchströmenden Mediums kann mit Hilfe einer Bypassleitung zur Umgehung des Wärmetauschers sowie eines Ventils zur Steuerung des Kabineabluftstroms durch den Wärmetauscher bzw. die Bypassleitung gesteuert werden.

Wenn nicht ausreichend Kabinenabluft zur Verfügung steht, um einen ordnungsgemäßen Betrieb der Brennstoffzelle zu gewährleisten, kann der Oxidationsmittelzufuhrleitung über eine Umgebungsluftleitung Stauluft aus einem Stauluftkanal des Luftfahrzeugs zugeführt werden.

Aus einem Abgasauslass der Brennstoffzelle austretendes Brennstoffzellenabgas wird einer Expansionsvorrichtung zugeführt. In der Expansionsvorrichtung wird das unter einem erhöhten Druck stehende Brennstoffzellenabgas auf das Umgebungsdruckniveau entspannt. Die dabei zurückgewonnene Energie kann zum Antreiben eines Generators oder eines mechanischen Verbrauchers, wie z.B. eines Verdichters genutzt werden.

Ein bevorzugtes Ausführungsbeispiel eines Luftfahrzeug-Brennstoffzellensystems wird nun anhand der beigefügten schematischen Zeichnungen näher erläutert, von denen
- Figur 1: eine Übersichtsdarstellung eines Luftfahrzeug-Brennstoffzellensystems zeigt,
- Figuren 2a bis c: verschiedene Varianten einer Verdichteranordnung zeigen, und
- Figuren 3a bis b: verschiedene Varianten der Nutzung von mittels einer Turbine rückgewonnener Energie zeigen.

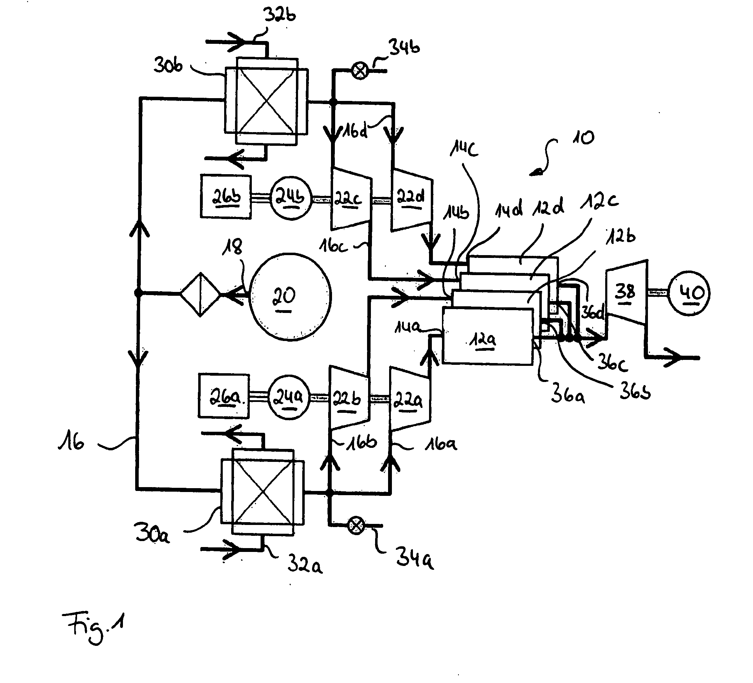

Figur 1 zeigt ein zur Verwendung an Bord eines Flugzeugs vorgesehenes Brennstoffzellensystem 10, das eine Mehrzahl von Brennstoffzellen 12a, 12b, 12c, 12d umfasst. Jede Brennstoffzelle 12a, 12b, 12c, 12d ist in Form einer Polymerelektrolytmembra-Brennstoffzelle ausgebildet und weist eine Kathode sowie eine durch eine Polymerelektrolytmembran von der Kathode getrennte Anode auf. Die Kathode einer jeden Brennstoffzelle 12a, 12b, 12c, 12d ist mit einem Oxidationsmitteleinlass 14a, 14b, 14c, 14d verbunden, über den der Kathode ein sauerstoffhaltiges Medium zugeführt werden kann.

Jeder Oxidationsmitteleinlass 14a, 14b, 14c, 14d ist mit einem ersten Ende eines entsprechenden Zweigs 16a, 16b, 16c, 16d einer Oxidationsmittelzufuhrleitung 16 verbunden. Ein zweites Ende der Oxidationsmittelzufuhrleitung 16 steht mit einem Abluftauslass 18 einer Kabine 20 des Luftfahrzeugs in Verbindung. Im Flugbetrieb des Flugzeugs wird die Kabine 20 mit Hilfe einer Klimaanlage auf einem gegenüber dem Umgebungsdruck erhöhten Druck gehalten. Wenn sich das Flugzeug auf Reiseflughöhe befindet, beträgt der Kabinendruck ca. 0,8 bar. Dem Oxidationsmitteleinlass 14a, 14b, 14c, 14d einer jeden Brennstoffzelle 12a, 12b, 12c, 12d ist somit über die Oxidationsmittelzufuhrleitung 16 Kabinenabluft zuführbar, die sich im Flugbetrieb des Flugzeugs, insbesondere dann, wenn das Flugzeug in Reiseflughöhe fliegt, auf einem deutlich höheren Druckniveau befindet als die Umgebungsluft.

In den Zweigen 16a, 16b, 16c, 16d der Oxidationsmittelzufuhrleitung 16 ist jeweils ein Verdichter 22a, 22b, 22c, 22d angeordnet. Die Verdichter 22a, 22b, 22c, 22d dienen dazu, die den Brennstoffzellen 12a, 12b, 12c, 12d zuzuführende Kabinenabluft auf das erforderliche Druckniveau von ca. 1,3 bis 1,4 bar zu verdichten. Darüber hinaus wird die Temperatur der den Brennstoffzellen 12a, 12b, 12c, 12d zuzuführenden Kabinenabluft durch den Verdichtungsprozess erhöht. Aus Redundanzgründen ist jeder Brennstoffzelle 12a, 12b, 12c, 12d ein separat ausgebildeter Verdichter 22a, 22b, 22c, 22d zugeordnet.

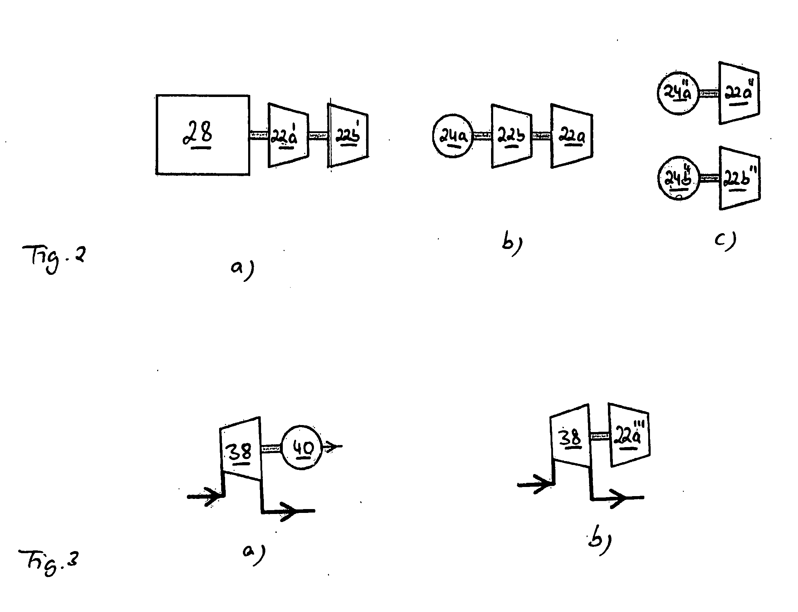

Wie in den Figuren 1 und 2b gezeigt ist, können jeweils zwei Verdichter 22a, 22b bzw. 22c, 22d auf einer gemeinsamen Welle angeordnet sein und von einem Elektromotor 24a, 24b angetrieben werden. Die Elektromotoren werden jeweils von einem Umrichter 26a, 26b mit elektrischer Energie versorgt. Alternative Verdichteranordnungen sind in den Figuren 2a und 2c gezeigt. Gemäß Figur 2a können zwei auf einer gemeinsamen Welle angeordnete Verdichter 22a', 22b' auch von einer Air-Cycle-Machine 28 eines Klimaaggregats der Flugzeugklimaanlage angetrieben werden. Schließlich ist es, wie in Figur 2c gezeigt ist, auch möglich, jeden Verdichter 22a", 22b" mit Hilfe eines separaten Elektromotors 24a", 24b" anzutreiben.

Wie oben erwähnt, wird die den Brennstoffzellen 12a, 12b, 12c, 12d zuzuführende Kabinenabluft bereits durch den Verdichtungsprozess erwärmt. Um auch bei hohen Betriebstemperaturen der Brennstoffzellen 12a, 12b, 12c, 12d eine ordnungsgemäße Vorwärmung der den Brennstoffzellen 12a, 12b, 12c, 12d zuzuführenden Kabinenabluft zu gewährleisten, sind in der Oxidationsmittelzufuhrleitung 16 ferner zwei Wärmetauscher 30a, 30b angeordnet. Um einen energieeffizienten Betrieb der Wärmetauscher 30a, 30b zu ermöglichen, sind die Wärmetauscher 30a, 30b stromaufwärts der Verdichter 22a, 22b, 22c, 22d in der Oxidationsmittelzufuhrleitung 16 positioniert. Insbesondere kann durch die größere Temperaturdifferenz bei einer derartigen Anordnung die Wärmeübertragerfläche und damit Größe und Gewicht der Wärmetauscher 30a, 30b kleiner gehalten werden.

Die Wärmetauscher 30a, 30b stellen eine thermische Kopplung zwischen der die Oxidationsmittelzufuhrleitung 16 durchströmenden Kabinenabluft und zu kühlender Klimaprozessluft her, die eine Leitung 32a, 32b der Flugzeugklimaanlage durchströmt. In den Wärmetauschern 30a, 30b wird Wärme von der Klimaprozessluft auf die Kabinenabluft übertragen, so dass die Klimaprozessluft auf eine tiefere Temperatur abgekühlt wird, während die Kabinenabluft eine Erwärmung erfährt. Die Leitung 32a führt dem Wärmetauscher 30a von einem Kabinenluftverdichter eines ersten Klimaaggregats der Flugzeugklimaanlage verdichtete und sich damit auf einer erhöhten Temperatur befindende Klimaprozessluft zu. In ähnlicher Weise führt die Leitung 32b dem Wärmetauscher 30b von einem Kabinenluftverdichter eines zweiten Klimaaggregats der Flugzeugklimaanlage verdichtete zu kühlende Klimaprozessluft zu.

Um auch dann eine ordnungsgemäße Funktion der Brennstoffzellen 12a, 12b, 12c, 12d zu gewährleisten, wenn nicht genügend Kabinenabluft zur Verfügung steht, ist die Oxidationsmittelzufuhrleitung 16 über zwei Umgebungsluftleitungen 34a, 34b mit einem Stauluftkanal des Luftfahrzeugs verbunden. Bei Bedarf kann den Brennstoffzellen 12a, 12b, 12c, 12d somit über die Umgebungsluftleitungen 34a, 34b unter einem gegenüber dem Umgebungsdruck erhöhten Druck stehende Stauluft zugeführt werden.

In vielen Betriebszuständen emittieren die Brennstoffzellen 12a, 12b, 12c, 12d über entsprechende Abgasauslässe 36a, 36b, 36c, 36d Brennstoffzellenabgas, das sich auf einem gegenüber dem Umgebungsdruck erhöhten Druckniveau befindet. In Abhängigkeit der Umgebungsbedingungen, der Flughöhe des Flugzeugs und dem Lastzustand der Brennstoffzellen 12a, 12b, 12c, 12d kann der Druck des Brennstoffzellenabgases bis zum Dreifachen des Umgebungsdrucks betragen. Zur Rückgewinnung der in dem Brennstoffzellenabgas gespeicherten Druckenergie sind die Abgasauslässe 36a, 36b, 36c, 36d der Brennstoffzellen 12a, 12b, 12c, 12d daher mit einer in Form einer Turbine ausgebildeten Expansionsvorrichtung 38 verbunden. In der Expansionsvorrichtung 38 wird das Brennstoffzellenabgas auf das Umgebungsdruckniveau entspannt.

Gemäß den Figuren 1 und 3a wird die in der Expansionsvorrichtung 38 gewonnene mechanische Energie von einem an die Expansionsvorrichtung 38 gekoppelten Generator 40 in elektrische Energie umgewandelt. Die von dem Generator 40 erzeugte elektrische Energie wird in ein elektrisches Bordnetz des Flugzeugs eingespeist und kann beispielsweise die Elektromotoren 24a, 24b zum Antreiben der Verdichter 22a, 22b, 22c, 22d mit elektrischer Energie versorgen. Wie in Figur 3b gezeigt ist, ist es jedoch auch möglich, die Expansionsvorrichtung 38 über eine gemeinsame Welle direkt mit einem Verdichter 22a'" zu koppeln. Der Verdichter 22a'" kann beispielsweise ein Verdichter zur Verdichtung der den Brennstoffzellen 12a, 12b, 12c, 12d zuzuführenden Kabinenabluft sein. Alternativ dazu kann der Verdichter 22a"' jedoch auch der Flugzeugklimaanlage zugeordnet sein.

## Patentansprüche

1. Luftfahrzeug mit einem Brennstoffzellensystem (10) sowie einer Klimaanlage, wobei das Brennstoffzellensystem (10) umfasst:
- eine Brennstoffzelle (12a, 12b, 12c, 12d), die einen Oxidationsmitteleinlass (14a, 14b, 14c, 14d) zur Zufuhr eines sauerstoffhaltigen Mediums in die Brennstoffzelle (12a, 12b, 12c, 12d) aufweist,
- eine Oxidationsmittelzufuhrleitung (16), deren erstes Ende mit dem Oxidationsmitteleinlass (14a, 14b, 14c, 14d) der Brennstoffzelle (12a, 12b, 12c, 12d) verbunden ist und deren zweites Ende mit einem Abluftauslass (18) einer Kabine (20) des Luftfahrzeugs verbunden ist, und
- einen in der Oxidationsmittelzufuhrleitung (16) angeordneten Wärmetauscher (30a, 30b),
**dadurch gekennzeichnet, dass** der Wärmetauscher (30a, 30b) eine thermische Kopplung zwischen dem die Oxidationsmittelzufuhrleitung (16) des Brennstoffzellensystems (10) durchströmenden Medium und einem Medium herstellt, das eine Klimaprozessluftleitung (32a, 32b) der Klimaanlage stromabwärts eines Kabinenluftverdichters durchströmt, wobei das die Klimaprozessluftleitung (32a, 32b) durchströmende Medium zu kühlende Klimaprozessluft ist, die von einem Klimaaggregat des Luftfahrzeugs bereitgestellt wird und zur Belüftung der Kabine (20) des Luftfahrzeugs vorgesehen ist.

2. Luftfahrzeug nach Anspruch 1,
**gekennzeichnet durch** einen in der Oxidationsmittelzufuhrleitung (16) angeordneten Verdichter (22a, 22b, 22c, 22d).

3. Luftfahrzeug nach Anspruch 1 oder 2,
**gekennzeichnet durch** eine Bypassleitung zur Umgehung des Wärmetauschers (30a, 30b) sowie ein Ventil zur Steuerung der Temperatur des die Oxidationsmittelzufuhrleitung (16) durchströmenden Mediums.

4. Luftfahrzeug nach einem der Ansprüche 1 bis 3,
**dadurch gekennzeichnet, dass** die Oxidationsmittelzufuhrleitung (16) über eine Umgebungsluftleitung (34a, 34b) mit einem Stauluftkanal des Luftfahrzeugs verbindbar ist.

5. Luftfahrzeug nach einem der Ansprüche 1 bis 4,
**dadurch gekennzeichnet, dass** ein Abgasauslass (36a, 36b, 36c, 36d) der Brennstoffzelle (12a, 12b, 12c, 12d) mit einer Expansionsvorrichtung (38) verbunden ist.

6. Luftfahrzeug nach einem der Ansprüche 1 bis 5,
**gekennzeichnet durch** eine Mehrzahl von Brennstoffzellen (12a, 12b, 12c, 12d) sowie eine Mehrzahl von Verdichtern (22a, 22b, 22c, 22d), wobei jeder Brennstoffzelle (12a, 12b, 12c, 12d) ein Verdichter (22a, 22b, 22c, 22d) zugeordnet ist.

7. Verfahren zum Betreiben eines Luftfahrzeugs mit einem Brennstoffzellensystem (10) sowie einer Klimaanlage mit den Schritten:
- Bereitstellen einer Brennstoffzelle (12a, 12b, 12c, 12d) mit einem Oxidationsmitteleinlass (14a, 14b, 14c, 14d) zur Zufuhr eines sauerstoffhaltigen Mediums in die Brennstoffzelle (12a, 12b, 12c, 12d), wobei der Oxidationsmitteleinlass (14a, 14b, 14c, 14d) der Brennstoffzelle (12a, 12b, 12c, 12d) mit einem ersten Ende einer Oxidationsmittelzufuhrleitung (16) verbunden ist, und
- Zuführen von Abluft aus einem Abluftauslass (18) einer Kabine (20) des Luftfahrzeugs zu dem Oxidationsmitteleinlass (14a, 14b, 14c, 14d) der Brennstoffzelle (12a, 12b, 12c, 12d) über die Oxidationsmittelzufuhrleitung (16),
**dadurch gekennzeichnet, dass** das die Oxidationsmittelzufuhrleitung (16) durchströmende Medium mit Hilfe eines Wärmetauschers (30a, 30b) thermisch mit einem Medium gekoppelt wird, das eine Klimaprozessluftleitung (32a, 32b) der Klimaanlage stromabwärts eines Kabinenluftverdichters durchströmt, wobei das die Klimaprozessluftleitung (32a, 32b) durchströmende Medium zu kühlende Klimaprozessluft ist, die von einem Klimaaggregat des Luftfahrzeugs bereitgestellt wird und zur Belüftung der Kabine (20) des Luftfahrzeugs vorgesehen ist.

8. Verfahren nach Anspruch 7,
**dadurch gekennzeichnet, dass** die Temperatur des die Oxidationsmittelzufuhrleitung (16) durchströmenden Mediums mit Hilfe einer Bypassleitung zur Umgehung des Wärmetauschers (30a, 30b) sowie eines Ventils gesteuert wird.

9. Verfahren nach Anspruch 7 oder 8,
**dadurch gekennzeichnet, dass** der Oxidationsmittelzufuhrleitung (16) über eine Umgebungsluftleitung (34a, 34b) Stauluft aus einem Stauluftkanal des Luftfahrzeugs zugeführt wird.

10. Verfahren nach einem der Ansprüche 7 bis 9,
**dadurch gekennzeichnet, dass** aus einem Abgasauslass (36a, 36b, 36c, 36d) der Brennstoffzelle (12a, 12b, 12c, 12d) austretendes Brennstoffzellenabgas einer Expansionsvorrichtung (38) zugeführt und mit Hilfe der Expansionsvorrichtung (38) auf Umgebungsdruckniveau entspannt wird.

## Claims

1. An aircraft comprising a fuel cell system (10) and an air conditioning system, wherein the fuel cell system (10) comprises:
- a fuel cell (12a, 12b, 12c, 12d) which has an oxidant inlet (14a, 14b, 14c, 14d) for supplying an oxygen-containing medium to the fuel cell (12a, 12b, 12c, 12d),
- an oxidant supply line (16) whereof a first end is connected to the oxidant inlet (14a, 14b, 14c, 14d) of the fuel cell (12a, 12b, 12c, 12d) and whereof a second end is connected to a used air outlet (18) of a cabin (20) of the aircraft, and
- a heat exchanger (30a, 30b) which is arranged in the oxidant supply line (16), **characterised in that** the heat exchanger (30a, 30b) provides for a thermal coupling of the medium flowing through the oxidant supply line (16) of the fuel cell system (10) and a medium flowing through an air conditioning process air line (32a, 32b) of the air conditioning system downstream of a cabin air compressor, wherein the medium flowing through the air conditioning process air line (32a, 32b) is air conditioning process air to be cooled which is provided by an air conditioning pack of the aircraft and which is intended to be used for venting the cabin (20) of the aircraft.

2. The aircraft according to Claim 1,
**characterised by** a compressor (22a, 22b, 22c, 22d) arranged in the oxidant supply line (16).

3. The aircraft according to Claim 1 or 2,
**characterised by** a bypass line for bypassing the heat exchanger (30a, 30b) and a valve for controlling the temperature of the medium flowing through the oxidant supply line (16).

4. The aircraft according to one of Claims 1 to 3,
**characterised in that** the oxidant supply line (16) is connectable to a ram air duct of the aircraft via an ambient air line (34a, 34b).

5. The aircraft according to one of Claims 1 to 4,
**characterised in that** a waste gas outlet (36a, 36b, 36c, 36d) of the fuel cell (12a, 12b, 12c, 12d) is connected to an expansion device (38).

6. The aircraft fuel according to one of Claims 1 to 5,
**characterised by** a plurality of fuel cells (12a, 12b, 12c, 12d) and a plurality of compressors (22a, 22b, 22c, 22d), with a compressor (22a, 22b, 22c, 22d) being associated with each fuel cell (12a, 12b, 12c, 12d).

7. A method for operating an aircraft comprising a fuel cell system (10) and an air conditioning system, the method having the steps of:
- providing a fuel cell (12a, 12b, 12c, 12d) having an oxidant inlet (14a, 14b, 14c, 14d) for supplying an oxygen-containing medium to the fuel cell (12a, 12b, 12c, 12d), with the oxidant inlet (14a, 14b, 14c, 14d) of the fuel cell (12a, 12b, 12c, 12d) being connected to a first end of an oxidant supply line (16), and
- supplying used air from a used air outlet (18) of a cabin (20) of the aircraft to the oxidant inlet (14a, 14b, 14c, 14d) of the fuel cell (12a, 12b, 12c, 12d) via the oxidant supply line (16),
**characterised in that** the medium flowing through the oxidant supply line (16), with the aid of a heat exchanger (30a, 30b), is thermally coupled to a medium which flows through an air conditioning process air line (32a, 23b) of the aircraft air conditioning system downstream of a cabin air compressor, wherein the medium flowing through the air conditioning process air line (32a, 32b) is air conditioning process air to be cooled which is provided by an air conditioning pack of the aircraft and which is intended to be used for venting the cabin (20) of the aircraft.

8. The method according to Claim 7,
**characterised in that** the temperature of the medium flowing through the oxidant supply line (16) is controlled with the aid of a bypass line for bypassing the heat exchanger (30a, 30b) and a valve.

9. The method according to Claim 7 or 8,
**characterised in that** the oxidant supply line (16) is supplied with ram air from a ram air duct of the aircraft via an ambient air line (34a, 34b).

10. The method according to one of Claims 7 to 9,
**characterised in that** fuel cell waste gas emerging from a waste gas outlet (36a, 36b, 36c, 36d) of the fuel cell (12a, 12b, 12c, 12d) is supplied to an expansion device (38) and is expanded to atmospheric pressure level with the aid of the expansion device (38).

## Revendications

1. Aéronef équipé d'un système à pile à combustible (10) et d'une installation de climatisation, le système à pile à combustible (10) comprenant :
- une pile à combustible (12a, 12b, 12c, 12d) qui présente une entrée (14a, 14b, 14c, 14d) d'agent d'oxydation servant à amener un fluide contenant de l'oxygène dans la pile à combustible (12a, 12b, 12c, 12d),
- un conduit d'amenée d'agent d'oxydation (16) dont la première extrémité est reliée à l'entrée (14a, 14b, 14c, 14d) d'agent d'oxydation de la pile à combustible (12a, 12b, 12c, 12d) et dont la deuxième extrémité est reliée à une sortie d'évacuation (18) de l'air de la cabine (20) de l'aéronef, et
- un échangeur de chaleur (30a, 30b) disposé dans le conduit d'amenée d'agent d'oxydation (16),
**caractérisé en ce que** l'échangeur de chaleur (30a, 30b) établit un couplage thermique entre le fluide qui traverse le conduit d'amenée d'agent d'oxydation (16) du système à pile à combustible (10) et un fluide qui traverse un conduit d'air de processus (32a, 32b) de l'installation de climatisation, en aval d'un compresseur d'air de cabine, le fluide traversant ledit conduit d'air (32a, 32b) étant de l'air de processus à refroidir qui est fourni par un climatiseur de l'aéronef et est prévu pour l'aération de la cabine (20) de l'aéronef.

2. Aéronef selon la revendication 1,
**caractérisé par** un compresseur (22a, 22b, 22c, 22d) disposé dans le conduit d'amenée d'agent d'oxydation (16).

3. Aéronef selon la revendication 1 ou 2,
**caractérisé par** une conduite de dérivation pour le contournement de l'échangeur de chaleur (30a, 30b) et par une soupape pour la régulation de la température du fluide traversant le conduit d'amenée d'agent d'oxydation (16).

4. Aéronef selon l'une des revendications 1 à 3,
**caractérisé en ce que** le conduit d'amenée d'agent d'oxydation (16) peut être relié par l'intermédiaire d'un conduit d'air ambiant (34a, 34b) à un canal d'air sous pression dynamique de l'aéronef.

5. Aéronef selon l'une des revendications 1 à 4,
**caractérisé en ce qu'**une sortie d'évacuation (36a, 36b, 36c, 36d) de la pile à combustible (12a, 12b, 12c, 12d) est reliée à un dispositif d'expansion (38).

6. Aéronef selon l'une des revendications 1 à 5,
**caractérisé par** une pluralité de piles à combustible (12a, 12b, 12c, 12d) et par une pluralité de compresseurs (22a, 22b, 22c, 22d), un compresseur (22a, 22b, 22c, 22d) étant associé à chaque pile à combustible (12a, 12b, 12c, 12d).

7. Procédé pour faire fonctionner un aéronef équipé d'un système à pile combustible (10) et d'une installation de climatisation, comprenant les étapes suivantes :
- la mise à disposition d'une pile à combustible (12a, 12b, 12c, 12d) munie d'une entrée d'agent d'oxydation (14a, 14b, 14c, 14d) servant à amener un fluide contenant de l'oxygène dans la pile à combustible (12a, 12b, 12c, 12d), cette entrée d'agent d'oxydation (14a, 14b, 14c, 14d) de la pile à combustible (12a, 12b, 12c, 12d) étant reliée à une première extrémité d'un conduit d'amenée d'agent d'oxydation (16), et
- l'acheminement d'air d'évacuation provenant d'une sortie d'évacuation (18) d'une cabine (20) de l'aéronef vers l'entrée d'agent d'oxydation (14a, 14b, 14c, 14d) de la pile à combustible (12a, 12b, 12c, 12d) par l'intermédiaire du conduit d'amenée d'agent d'oxydation (16),
**caractérisé en ce que** le fluide traversant le conduit d'amenée d'agent d'oxydation (16) est thermiquement couplé à l'aide d'un échangeur de chaleur (30a, 30b) à un fluide qui traverse un conduit d'air de processus (32a, 32b) de l'installation de climatisation, en aval d'un compresseur d'air de cabine, le fluide traversant ledit conduit d'air de processus (32a, 32b) étant de l'air de processus à refroidir qui est fourni par un climatiseur de l'aéronef et est prévu pour l'aération de la cabine (20) de l'aéronef.

8. Procédé selon la revendication 7,
**caractérisé en ce que** la température du fluide traversant le conduit d'amenée d'agent d'oxydation (16) est réglée par le biais d'un conduit de dérivation pour le contournement de l'échangeur de chaleur (30a, 30b) et d'une soupape.

9. Procédé selon la revendication 7 ou 8,
**caractérisé en ce que** de l'air provenant d'un canal d'air sous pression dynamique de l'aéronef est amené par l'intermédiaire d'un conduit d'air ambiant (34a, 34b) au conduit d'amenée d'agent d'oxydation (16).

10. Procédé selon l'une des revendications 7 à 9,
**caractérisé en ce que** le gaz de la pile à combustible sortant d'une sortie d'évacuation (36a, 36b, 36c, 36d) de la pile à combustible (12a, 12b, 12c, 12d) est amené à un dispositif d'expansion (38) et ramené à l'aide dudit dispositif d'expansion (38) au niveau de pression ambiante.
